# EUROPEAN PATENT SPECIFICATION

(11) **EP 3 552 592 B1**
(45) Date of publication and mention of the grant of the patent: **07.10.2020**
(21) Application number: 19167256.7
(22) Date of filing: 04.04.2019
(51) Int. Cl.: A61G 1/02, A61G 7/08, B60B 33/02

(54) **MOTORIZED TRANSPORT STRUCTURE FOR HEALTHCARE USE OR SIMILAR**
MOTORISIERTE TRANSPORTSTRUKTUR FÜR GESUNDHEITSWESEN ODER ÄHNLICHES
STRUCTURE DE TRANSPORT MOTORISÉE POUR SERVICES DE SANTÉ OU SIMILAIRE

(30) Priority: 10.04.2018 IT 201800004366
(43) Date of publication of application: 16.10.2019
(73) Proprietor: Favero Health Projects Spa, 31044 Montebelluna (TV) (IT)
(72) Inventor: Favero, Giordano, I-31044 Montebelluna (TV) (IT)
(74) Representative: De Bortoli, Eros

(56) References cited:
- EP-A2- 2 085 062
- US-A1- 2003 102 172
- US-A1- 2016 089 283

## Description

The present invention relates to a motorized transport structure, particularly suitable for use in the healthcare or similar field, for example a motorized bed or stretcher.

As is known, a transport structure, of the type used in the healthcare or similar field, comprises a support frame adapted to define a support surface (normally for one person) and a plurality of main wheel groups operatively connected to said support frame (generally at the corners thereof) in order to allow the transport structure to move along a travel surface. Typically, the transport structure includes a pedal control mechanism for controlling the setup of the aforementioned main wheel groups.

As is known, some transport structures for use in the healthcare or similar field are motorized. In addition to the main wheel groups, a motorized transport structure generally comprises an auxiliary wheel group (also known as a "guide wheel group" or "fifth wheel group") normally arranged in a central position with respect to the support frame and comprising actuator means for operating a driving wheel and moving the transport structure in a travel direction. Typically, in order to supply electric power to the aforesaid actuator means, a motorized transport structure comprises a supply battery rechargeable by connection to the electrical network.

Motorized structures for use in the healthcare or similar field, currently available in the prior art, have some aspects to be improved, in particular as regards their comfort and flexibility of use. US2003102172 discloses a transport structure for healthcare or similar use including all the technical feature of the preamble of claim 1.

In the state of the art, therefore, the need to have solutions which are characterized by a considerable simplicity of use and which are relatively easy to produce industrially, at economically competitive costs, is therefore still felt.

The present invention aims to meet this need by providing a transport structure, according to claim 1 and the relative dependent claims proposed below.

In a general definition, the transport structure according to the present invention comprises:
- a support frame;
- a plurality of main wheel groups operatively connected to said support frame and each comprising a wheel; Each main wheel group is able to take a free position, at which said wheel is capable of moving in a travel direction and around a pivoting axis, a half-locking position, at which said wheel is able to move in a travel direction and is not able to move around said pivoting axis, and a locking position, at which said wheel is locked;
- a control mechanism operatively connected to said main wheel groups. Said control mechanism is operable to make said main wheel groups take said free position, said half-locking position or said locking position;
- first actuator means operatively connected to said control mechanism and operable to actuate said driving mechanism and make said main wheel groups take said free position, said half-locking position or said locking position;
- an auxiliary wheel group operatively connected to said support frame and comprising a driving wheel capable of moving in a travel direction. The aforementioned driving wheel is operable to move said transport structure along a travel direction;
- a supply battery for supplying electrical and electronic components of said transport structure;
- a control unit capable of controlling the operation of said first actuator means;
- a control device operatively connected to said control unit and operable by a user to send to said control unit enabling signals for moving said transport structure according to a travel direction, actuating said driving wheel.

According to the invention, the control unit is configured to perform, in response to the reception of an enabling signal from said control device, a control procedure which comprises the following steps:
- determining the operating position taken by the aforementioned main wheel groups;
- if said main wheel groups are in said half-locking position, commanding said first actuator means to actuate said control mechanism to make the aforementioned main wheel groups take said free position.

Preferably, the step of determining the operating position taken by said main wheel groups comprises:
- acquiring detection signals indicative of the operating position of said main wheel groups provided by sensor means operatively connected to the control unit;
- processing said detection signals to determine the operating position taken by said main wheel groups.

Preferably, the aforementioned control procedure comprises the step of commanding signalling means, operatively connected to the control unit, to provide alarm signals,
if said main wheel groups are in said locking position.

Preferably, the aforementioned control procedure comprises the step of commanding said first actuation means to actuate the aforesaid control mechanism to keep said main wheel groups in a free position, if said main wheel groups are in said free position.

Further features and advantages of the transport structure, according to the invention, can be better understood with reference to the description given below and to the accompanying figures, provided for merely illustrative and non-limiting purposes, in which:

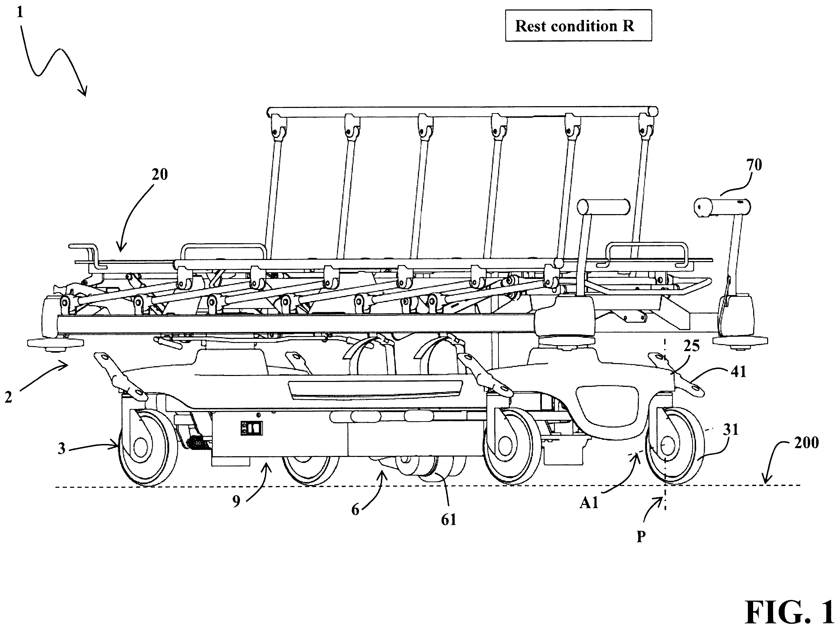

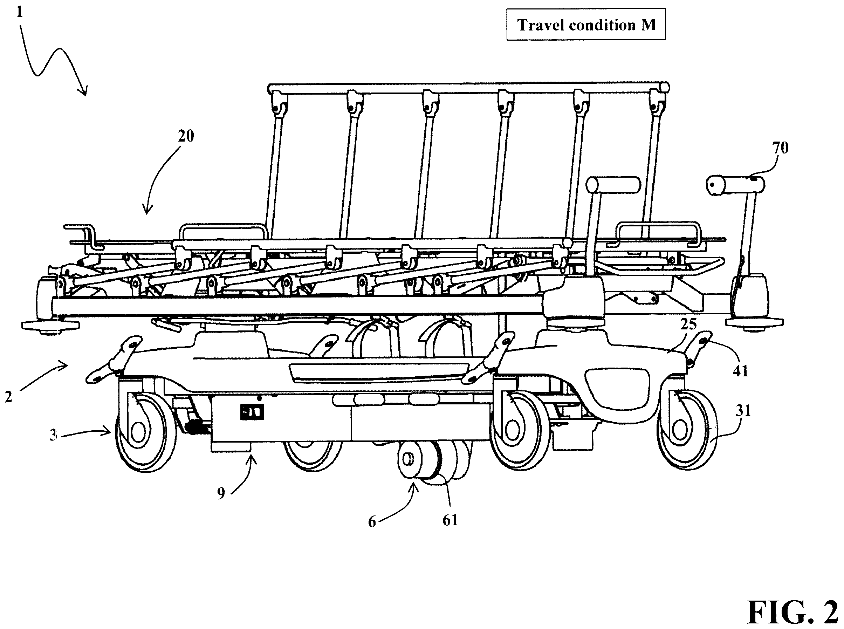

- figures 1-2 schematically show some general views of the transport structure, according to the invention, in different operating conditions;

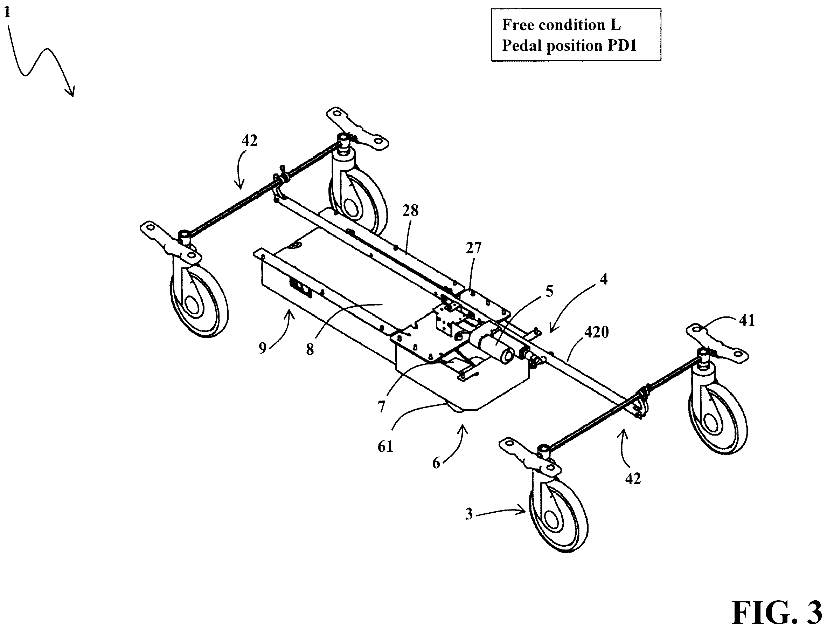

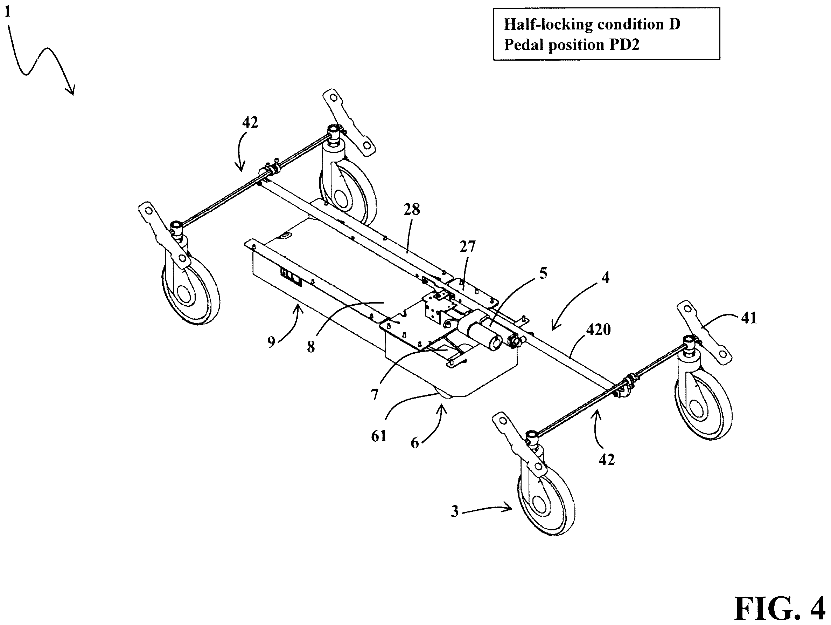

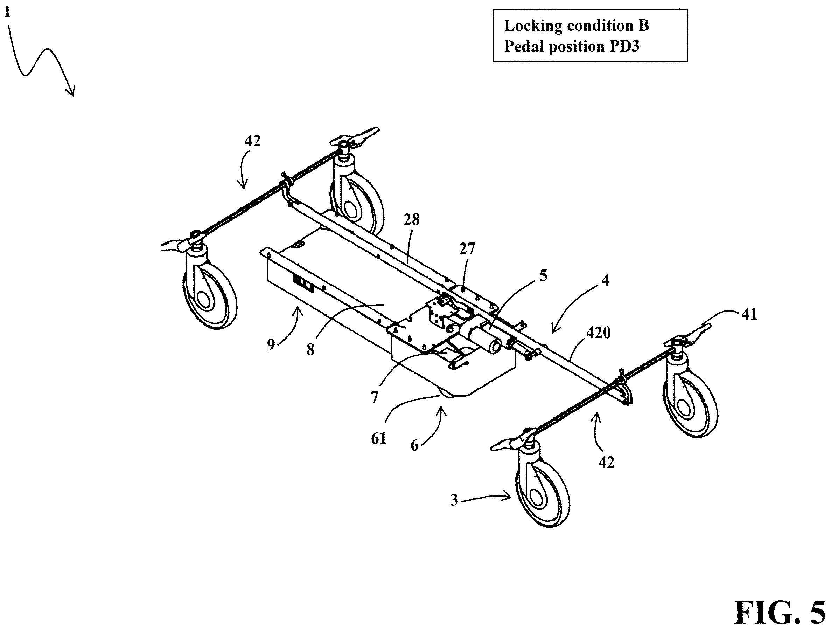

- figures 3-5 schematically illustrate the transport structure, according to the invention, in further different operating conditions;

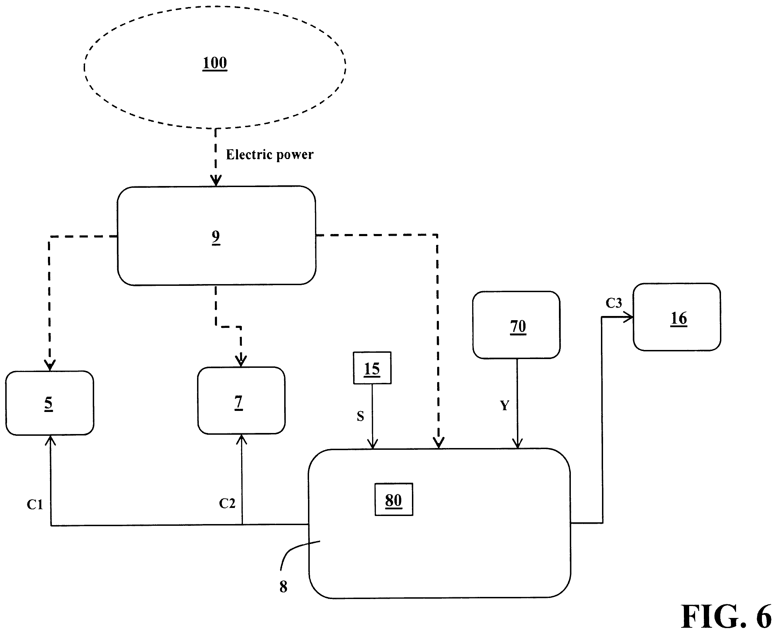

- figure 6 is a block diagram which synthetically shows the components and functions of the transport structure, according to the invention;
- figure 7 is a block diagram which synthetically shows a control procedure performed by a control unit included in the transport structure, according to the invention.

With reference to the above figures, the present invention relates to a motorized transport structure 1, particularly suitable for use in the healthcare or similar field.

For example, the transport structure 1 may be a motorized bed or stretcher suitable for use in hospitals, nursing homes, rest homes, and so on.

According to the invention, the transport structure 1 comprises a support frame 2 arranged to define a support surface 20, for example for a person to be transported.

In an industrial production, the support frame 2 may be made according to known solutions and, for obvious reasons of brevity, will be described herein only with regard to the aspects relevant to the invention.

According to the invention, the transport structure 1 comprises a plurality of main wheel groups 3 intended to allow the displacement of the transport structure itself along a travel surface 200.

Preferably, the transport structure 1 comprises four main wheel groups 3 operatively connected to the support frame 2, preferably at suitable supports 25 at the corners of the latter.

The main wheel groups 3 each comprise a corresponding wheel 31 operatively connected to a support, for example of the fork type, so as to be able to rotate about a rotation axis A1 substantially parallel to the travel surface 200 (when the transport structure 100 is in its normal operating position).

The main wheel groups 3 are also rotatably coupled to the frame 2 so as to be able to move around a pivoting axis P perpendicular to the rotation axis A1 and to the travel surface 200 (when the transport structure 100 is in the its normal operating position).

The main wheel groups 3 have a modifiable operating configuration.

In particular, each main wheel group 3 is able to take a free position L, at which the wheel 31 is able to move in a travel direction (rotating around its own axis of rotation A1) and around the pivoting axis P, a half-locking position D, at which the wheel 31 is able to move in a travel direction but is locked in its movement around the pivoting axis P, and a locking position B , at which said wheel is locked and is unable to move either around its own axis of rotation A1 or around its own pivoting axis P.

In an industrial embodiment thereof, the main wheel groups 3 may be made according to known solutions and, for obvious reasons of brevity, they will be described herein only with regard to the aspects relevant to the invention.

According to the invention, the transport structure 100 comprises a control mechanism 4 operatively connected to the main wheel groups 3 to control the operating setup thereof.

The control mechanism 4 may be operated to make the main wheel groups 3 take the aforementioned free position L, half-locking position D or locking position B.

Preferably, the control mechanism 4 comprises one or more control pedals 41 and a kinematic chain 42 adapted to connect the control pedals 41 with main wheel groups 3. Thanks to the control pedals 41, the control mechanism 4 can be operated manually. For example, a control pedal 41 may be operated by a user to make the main wheel groups 3 take the aforementioned free position L, half-locking position D or locking position B.

Preferably, at least one control pedal 41 (more preferably each control pedal) is movable in a first pedal position PD1, at which the main wheel groups 3 take a free position L, a second pedal position PD2, at which the main wheel groups 3 take a half-locking position D, or in a third pedal position PD3, at which the main wheel groups 3 take a locking position B.

Preferably, the control mechanism 4 comprises four control pedals 41, each positioned at a respective main wheel group.

Preferably, the kinematic chain 42 is made in such a way that each control pedal 41 can be operated alone to impose a desired operating configuration on all the main wheel groups 3, simultaneously.

In an industrial production, the control mechanism 4 may be made according to known solutions and, for obvious reasons of brevity, will be described herein only with regard to the aspects relevant to the invention.

According to the invention, the transport structure 1 comprises first actuator means 5 operatively connected to the control mechanism 4 to carry out an electric actuation of the latter.

In particular, the actuator means 5 may be activated to operate the control mechanism 4 and to make the main wheel groups 3 take the aforesaid free position L, half-locking position D or locking position B.

Advantageously, the control mechanism 4 and the first actuator means 5 are operatively connected to each other so that, when the first actuator means 5 are activated, the control mechanism 4 can be operated only by the latter and cannot be operated manually by acting on the control pedals 41.

In response to the operation of the control mechanism 4 by the first actuator means 5, the control pedals 41 move in a pedal position PD1, PD2, PD3 corresponding to the operating position (free L, half-locking D or locking B) imposed to the main wheel groups 3 by the first actuator means 5.

In other words, when they are activated, the first actuator means 5 also move the control pedals 41 to the pedal position PD1, PD2, PD3 corresponding to the operating position imposed on the main wheel groups 3, via the kinematic chain 42 of the control mechanism 4.

In this case, the control pedals 41 cannot be operated manually since the first actuator means 5 impose on them a certain operating position PD1, PD2, PD3.

Obviously, when the first actuator means 5 are deactivated, the control mechanism 4 can be operated manually by acting on the control pedals 41, in particular by moving the latter in the pedal position PD1, PD2, PD3 corresponding to the operating position (free L, half-locking D or locking B) desired for the main wheel groups 3.

Preferably, the first actuator means 5 consist of a linear motor operatively connected to a motion transmission rod 420 of the kinematic chain 42 of the control mechanism 4 and fixed to a fixing plate 27 of the support frame 2.

In an industrial production thereof, the actuator means 5 may be made according to known solutions and, for obvious reasons of brevity, will be described herein only with regard to the aspects relevant to the invention.

According to the invention, the transport structure 1 comprises an auxiliary wheel group 6 operatively connected to the support frame 2, for example to the fixing plate 27 of the latter, as illustrated in the aforementioned figures.

The auxiliary wheel group 6 comprises a driving wheel 61 operatively connected to a transport structure, for example of the fork type, so as to be able to rotate around a rotation axis A2 substantially parallel to the travel surface 200 (when the transport structure 100 is in its normal operating position).

Advantageously, the driving wheel 61 is operable to move the entire transport structure 1 along a travel direction.

Preferably, the auxiliary wheel group 6 is able to take a rest position R, at which the driving wheel 61 is not in contact with the travel surface 200, and a travel position M, at which the driving wheel 61 is in contact with the travel surface 200 and can be operated to move the transport structure 1.

In an industrial production, the auxiliary wheel group 6 may be made according to known solutions and, for obvious reasons of brevity, will be described herein only with regard to the aspects relevant to the invention.

Preferably, the transport structure 1 comprises second actuator means 7 operatively connected to the auxiliary wheel group 6.

The second actuator means 7 can be operated to actuate the driving wheel 61 of the auxiliary wheel group 6 and move the transport structure 1 in a travel direction.

Preferably, if the auxiliary group 6 is movable between the aforementioned rest R and travel M positions, the second actuator means 7 can be operated to make the auxiliary wheel group 6 take the rest position R or the travel position M.

Preferably, the second actuator means 7 consist of one or more electric motors operatively connected by a suitable kinematic mechanism (not shown) to the driving wheel 61 and, possibly, to the transport structure of the latter.

In an industrial production thereof, the actuator means 7 may be made according to known solutions and, for obvious reasons of brevity, will be described herein only with regard to the aspects relevant to the invention.

According to the invention, the transport structure 1 comprises a supply battery 9 for supplying the electrical or electronic components of said transport structure, for example the first and second actuator means 5, 7.

Preferably, the aforesaid supply battery 9 comprises one or more battery packs, for example of the Li-Pb type, operatively connected to the support frame 2, for example to a further fixing plate 28 of the latter, as illustrated in the aforementioned figures.

Advantageously, the supply battery 9 may be connected to an electric power source 100 for recharging, for example to the electric network. To this end, the supply battery 9 is preferably provided with an electronic power stage (not shown) connectable to a power cable and to the aforementioned battery packs.

In a production thereof, the supply battery 9 may be made in practice according to known solutions and, for obvious reasons of brevity, will be described herein only with regard to the aspects relevant to the invention.

According to the invention, the transport structure 1 comprises a control unit 8 capable of controlling the operation of the first and second actuator means 5, 7.

To control the first and second actuator means 5 and 7, the control unit 8 may advantageously provide the latter with appropriate second control signals C1, C2.

Preferably, the control unit 8 is provided with at least one data processing unit 80, for example of the microprocessor type, and may comprise suitable electronic control, interface or supply circuits (not shown) operatively connected to the aforesaid data processing unit. Preferably, the control unit 8 is supplied by the supply battery 9.

In an industrial embodiment thereof, the control unit 8 may be made using known industrial methods, for example industrial processes for making surface-mounted electronic boards or the like.

According to the invention, the transport structure 1 comprises a control device 70 operatively connected to the control unit 8.

The aforesaid control device 70 may advantageously be operated by a user to send enabling (consent) signals Y to the control unit 8 to move the transport structure 1 in a travel direction by operating the driving wheel 61.

In practice, in order to avoid undesired (motorized) movements of the transport structure 1 in the absence of an operator, the control unit 8 is configured to activate the second actuator means to operate the driving wheel 61 only in response to the enabling signal Y received from the control device 70.

In a preferred embodiment, the transport structure 1 comprises signalling means 16 controlled by the control unit 8, for example by means of suitable control signals C3. The signalling means 16 are adapted to provide light or sound alarm signals. For example, they may consist of LED devices or sound emission devices suitably controllable by the control unit 8.

Preferably, the transport structure 1 comprises sensor means 15 operatively connected to the control unit 8.

The sensor means 15 are advantageously adapted to send detection signals S indicative of the operating position taken by the main wheel groups 3.

Preferably, the sensor means 15 are operatively associated with a mechanical member of the control mechanism 4 and are adapted to detect the operating position of the main wheel groups 3 based on the operating position of the aforementioned mechanical member.

For example, the sensor means 15 may consist of one or more end-of-travel devices operatively associated with the motion transmission rod 420 so as to detect the operating position of the latter and, consequently, detect the operating position of the main wheel groups 3.

According to the invention, the control unit 8 is adapted to perform, in response to an enabling signal Y received from the control device 70, a control procedure 50 of the operation of the first actuator means 5.

The aforementioned control procedure 50 is advantageously configured to ensure easy manoeuvrability of the transport structure 1 during the motorized movement thereof or if the movement is prevented for some reason, for example due to a fault or because the supply battery 9 has exhausted its charge.

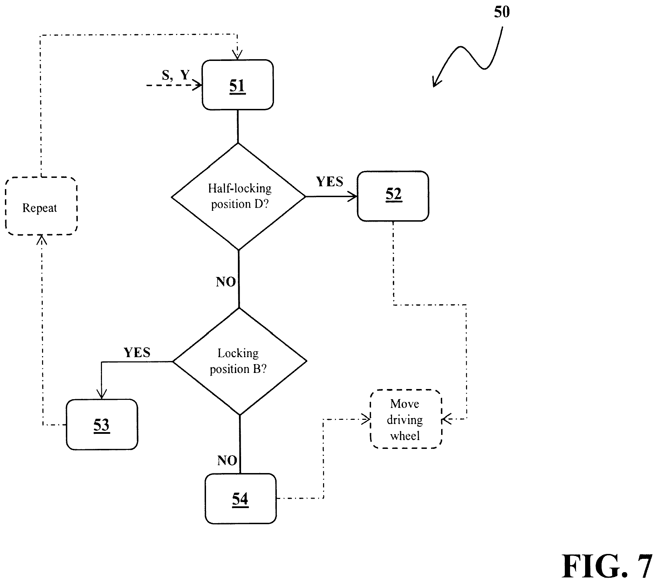

Preferably, the data processing unit 80 is able to execute appropriate software instructions, stored on a suitable memory medium, to implement the steps of the control procedure 50. Hereinafter, the control procedure 50, implemented by the control unit 8, is described in detail, with particular reference to figure 7.

As stated, the control procedure 50 is executed by the control unit 8 in response to an enabling signal Y received from the control device 70, prior to the actuation of the driving wheel 61 of the auxiliary wheel group 6.

In practice, each time an operator operates the control device 70, the control unit 8 advantageously executes the control procedure 50 to ensure that the transport structure 1 is in the best manoeuvrability conditions.

The control procedure 50 includes an initial step 51 for determining the operating position of the main wheel groups 3.

Preferably, the control unit 8 can perform the step 51 of the control procedure 50 based on the detection signals S provided by the sensor means 15 designed to detect the operating position of the main groups 3.

In this case, the step 51 for determining the operating position of the main wheel groups 3 advantageously comprises:
- acquiring the detection signals S provided by the sensor means 15;
- determining the operating position taken by the main wheel groups 3, based on the detection signals S supplied by the sensor means 15, suitably processing the aforementioned detection signals.

If the main wheel groups 3 are in the half-locking position D, the control procedure 50 comprises a step 52 of commanding the first actuator means 5 to operate the control mechanism 4 to make the main wheel groups 3 take the free position L.

If the main wheel groups 3 are in the locking position B, the control procedure 50 preferably comprises a step 53 for commanding the signalling means 16 to provide suitable sound and light alarm signals.

If the main wheel groups 3 are in the free position L, the control procedure 50 preferably comprises a step 54 for commanding the first actuator means 5 to operate the control mechanism 4 to keep the main wheel groups 3 in the free position L.

The steps 51-52 and, possibly, 54 of the control procedure 50 considerably facilitate the operation of the transport structure 1, when the latter is moved by actuating the driving wheel 61, since the travel direction is imposed by the driving wheel 61 alone without the intervention of the main wheel groups 3 which are placed in the free position L.

It should be noted that, since the control mechanism 4 is actuated by the first actuator means 5, the position of the main wheel groups 3 cannot be modified by acting on the control pedals 41 which remain locked in the pedal position PD1 corresponding to the free position L of the main wheel groups 3.

On the other hand, step 53 of the control procedure 50 is particularly useful for safely manoeuvring the transport structure 1.

The user is in fact warned that the main wheel groups 3 are in the locked position B, if he intends to move the transport structure electrically, by operating the driving wheel,
and can possibly bring the main wheel groups 3 to the free position L or to the half-locking position (D), before operating the control device 70 again and sending an enabling signal Y to the control unit 8, in response to which the latter proceeds to carry out the control procedure (50) again.

It is pointed out that, in this situation, for obvious safety reasons, the control procedure 50 does not provide for automatically bringing the main wheel groups 3 to the free position L. Advantageously, the control unit 8 is configured to control the second actuator means 6 to actuate the driving wheel 61 to move the transport structure 1, after having carried out said control procedure 50 described above.

Preferably, if the auxiliary wheel group 6 is movable between the aforementioned travel M and rest R positions, after executing the aforementioned control procedure 50, the control unit 8 is configured for:
- commanding the second actuator means 7 to operate the auxiliary wheel group 6 to make the latter take the aforementioned travel position M, if it is in said rest position R; and subsequently,
- when the auxiliary wheel group 6 is in the driving position M, commanding the second actuator means 6 to actuate the driving wheel 61 to move the transport structure 1.

The control functions described above, in particular the control procedure 50, are aimed at improving the manoeuvrability of the transport structure 1, if the user intends to move the latter electrically (i.e. by operating the driving wheel 61), acting on the control device 70. Obviously, the user can always move the transport structure 1 manually, when the actuator means 5, 7 are deactivated, for example in the case in which the supply battery 9 is exhausted. In this case, the user can advantageously act on the control pedals 41 to make the main wheel groups 3 take the half-locking position D and thus ensure optimum manoeuvrability of the transport structure 1.

To ensure easy manual manoeuvrability of the transport structure 1, if the auxiliary wheel group 6 is movable between the aforementioned travel M and rest R positions, the control unit 8 is preferably configured to control the second actuator means 7 for operating the auxiliary wheel group 6 to make the latter take the aforementioned rest position R, prior to any deactivation of the second actuator means 6.

It has been verified in practice that the transport structure, according to the invention, allows the predetermined tasks and objects to be achieved.

If the user intends (enabling signal Y) to move it electrically, by operating the driving wheel 61, the transport structure, according to the invention, is able to move automatically into an operating position which allows an optimal manoeuvrability, in safety conditions.

The transport structure is therefore easy to use for an operator.

The transport structure, according to the invention, is easily implemented on an industrial level, at competitive costs compared to the products available on the market.

## Claims

1. Transport structure (1) for healthcare or similar use, **characterized in that** it comprises:
- a support frame (2);
- a plurality of main wheel groups (3) operatively connected to said support frame and each comprising a wheel (31), each main wheel group being able to take a free position (L), at which said wheel is capable of moving in a travel direction and around a pivoting axis (P), a half-locking position (D), at which said wheel is able to move in a travel direction and is not able to move around said pivoting axis (P), and a locking position (B), at which said wheel is locked;
- a control mechanism (4) operatively connected to said main wheel groups, said control mechanism being operable to make said main wheel groups take said free position (L), said half-locking position (D) or said locking position (B);
- first actuator means (5) operatively connected to said control mechanism and operable to actuate said control mechanism;
- an auxiliary wheel group (6) operatively connected to said support frame (2) and comprising a driving wheel (61) capable of moving in a travel direction, said driving wheel being operable to move said transport structure in a travel direction;
- a supply battery (9) for supplying electrical and electronic components (5, 7, 8) of said transport structure;
- a control unit (8) capable of controlling the operation of said first actuator means;
- sensor means (15) operatively connected with said control unit and adapted to provide detection signals (S) indicative of the operating position of said main wheel groups (3);
- a control device (70) operatively connected to said control unit and operable by a user to send to said control unit enabling signals (Y) for moving said transport structure according to a travel direction, actuating said driving wheel (61);
**characterized in that** said control unit (8) is configured to perform, in response to the reception of an enabling signal (Y) from said control device (70), a control procedure (50) which comprises the following steps:
- determining (51) an operative position of said main wheel groups;
- if said main wheel groups are in said half-locking position (D), commanding (52) said first actuator means (5) to actuate said control mechanism (4) to make said main wheel groups (3) take said free position (L).

2. Transport structure, according to claim 1, **characterized in that** the step (51) of determining an operative position of said main wheel group (3) comprises:
- acquiring the detection signals (S) provided by said sensor means (15);
- processing said detection signals (S) to determine the operating position of said main wheel groups (3).

3. Transport structure, according to one or more of the preceding claims, **characterized in that** it comprises signalling means (16) controllable by said control unit (8) and adapted to provide light or sound alarm signals.

4. Transport structure, according to claim 3, **characterized in that**, if said main wheel groups (3) are in said locking position (B), said control procedure (50) comprises a step of commanding (53) said signalling means (16) to provide alarm signals.

5. Transport structure, according to one or more of the preceding claims, **characterized in that**, if said main wheel groups (3) are in said free position (L), said control procedure (50) comprises a step of commanding (54) said first actuator means (5) to actuate said control mechanism (4) to keep said main wheel groups in said free position (L).

6. Transport structure, according to one or more of the preceding claims, **characterized in that** it comprises second actuator means (7) operatively connected to said auxiliary wheel group (6) and controllable by said control unit (8) to operate said driving wheel (61) so as to move said transport structure along a traveling direction.

7. Transport structure, according to claim 6, **characterized in that** said control unit (8) is configured to control said second actuator means (6) to actuate said driving wheel (61) to move said transport structure, after having carried out said control procedure (50).

8. Transport structure according to one or more of the preceding claims, **characterized in that** said auxiliary wheel group (6) is able to take a rest position (R), at which said driving wheel (61) is not contact with a travel surface (200), and a travel position (M), at which said driving wheel is in contact with said travel surface, said second actuator means (7) being controllable by said control unit (8) to make said auxiliary wheel group (6) take said rest position (R) or said travel position (M).

9. Transport structure, according to claims 6 to 8, **characterized in that** said control unit (8) is configured for:
- commanding said second actuator means (7) to actuate said auxiliary wheel group (6) to make said auxiliary wheel group (6) take said travel position (M),
if said auxiliary wheel group is in said rest position (R);
- commanding said second actuator means to actuate said driving wheel (61) to move said transport structure, when said auxiliary wheel group is in said travel position (M); after executing said control procedure (50).

## Patentansprüche

1. Transportstruktur (1) für eine medizinische oder eine ähnliche Verwendung, **dadurch gekennzeichnet, dass** sie umfasst:
- einen Tragrahmen (2);
- eine Vielzahl von Hauptradgruppen (3), die funktionell mit dem Tragrahmen verbunden sind und jeweils ein Rad (31) umfassen, wobei jede Hauptradgruppe eine freie Position (L), in der sich das Rad in einer Fahrtrichtung und um eine Schwenkachse (P) bewegen kann, eine Halb-Verriegelungsposition (D), in der sich das Rad in einer Fahrtrichtung bewegen kann und sich nicht um die Schwenkachse (P) bewegen kann, und eine Verriegelungsposition (B), in der das Rad verriegelt ist, einnehmen kann;
- einen Steuermechanismus (4), der funktionell mit den Hauptradgruppen verbunden ist, wobei der Steuermechanismus betreibbar ist, um die Hauptradgruppen die freie Position (L), die Halb-Verriegelungsposition (D) oder die Verriegelungsposition (B) einnehmen zu lassen;
- erste Betätigungsmittel (5), die funktionell mit dem Steuermechanismus verbunden sind und betätigt werden können, um den Steuermechanismus zu betätigen;
- eine Hilfsradgruppe (6), die funktionell mit dem Tragrahmen (2) verbunden ist und ein Antriebsrad (61) umfasst, das in der Lage ist, sich in einer Fahrtrichtung zu bewegen, wobei das Antriebsrad betätigt werden kann, um die Transportstruktur in einer Fahrtrichtung zu bewegen;
- eine Versorgungsbatterie (9) zum Versorgen elektrischer und elektronischer Komponenten (5, 7, 8) der Transportstruktur;
- eine Steuereinheit (8), die in der Lage ist, den Betrieb der ersten Betätigungsmittel zu steuern;
- Sensormittel (15), die funktionell mit der Steuereinheit verbunden sind und eingerichtet sind, Erfassungssignale (S) zur Verfügung zu stellen, die die Betriebsposition der Hauptradgruppen (3) anzeigen;
- eine Steuervorrichtung (70), die funktionell mit der Steuereinheit verbunden ist und von einem Benutzer betreibbar ist, um an die Steuereinheit Freigabesignale (Y) zum Bewegen der Transportstruktur gemäß einer Fahrtrichtung zu senden, wobei das Antriebsrad (61) betätigt wird;
**dadurch gekennzeichnet, dass**
die Steuereinheit (8) konfiguriert ist, um als Antwort auf den Empfang eines Freigabesignals (Y) von der Steuervorrichtung (70) ein Steuerverfahren (50) durchzuführen, das die folgenden Schritte umfasst:
- Bestimmen (51) einer Betriebsposition der Hauptradgruppen;
- wenn sich die Hauptradgruppen in der Halb-Verriegelungsposition (D) befinden, Befehlen (52) der ersten Betätigungsmittel (5), den Steuermechanismus (4) zu betätigen, um zu veranlassen, dass die Hauptradgruppen (3) die freie Position (L) einnehmen.

2. Transportstruktur nach Anspruch 1, **dadurch gekennzeichnet, dass** der Schritt (51) des Bestimmens einer Betriebsposition der Hauptradgruppe (3) umfasst:
- Erfassen der Erfassungssignale (S), die von den Sensormitteln (15) zur Verfügung gestellt werden;
- Verarbeiten der Erfassungssignale (S), um die Betriebsposition der Hauptradgruppen (3) zu bestimmen.

3. Transportstruktur nach einem oder mehreren der vorhergehenden Ansprüche, **dadurch gekennzeichnet, dass** sie Signalisierungsmittel (16) umfasst, die durch die Steuereinheit (8) steuerbar sind und geeignet sind, Licht- oder Tonalarmsignale zur Verfügung zu stellen.

4. Transportstruktur nach Anspruch 3, **dadurch gekennzeichnet, dass**, wenn sich die Hauptradgruppen (3) in der Verriegelungsstellung (B) befinden, das Steuerverfahren (50) einen Schritt der Steuerung (53) der Signalisierungsmittel (16) umfasst, um Alarmsignale zur Verfügung zu stellen.

5. Transportstruktur nach einem oder mehreren der vorhergehenden Ansprüche, **dadurch gekennzeichnet, dass**, wenn sich die Hauptradgruppen (3) in der freien Position (L) befinden, das Steuerverfahren (50) einen Schritt der Steuerung (54) der ersten Betätigungsmittel (5) umfasst, um den Steuermechanismus (4) zu betätigen, um die Hauptradgruppen in der freien Position (L) zu halten.

6. Transportstruktur nach einem oder mehreren der vorhergehenden Ansprüche, **dadurch gekennzeichnet, dass** sie zweite Stellgliedmittel (7) umfasst, die funktional mit der Hilfsradgruppe (6) verbunden und durch die Steuereinheit (8) steuerbar sind, um das Antriebsrad (61) so zu betätigen, dass die Transportstruktur entlang einer Fahrtrichtung bewegt wird.

7. Transportstruktur nach Anspruch 6, **dadurch gekennzeichnet, dass** die Steuereinheit (8) konfiguriert ist, um die zweite Betätigungsmittel (6) zu steuern, um das Antriebsrad (61) zu betätigen, um die Transportstruktur zu bewegen, nachdem sie das Steuerverfahren (50) ausgeführt hat.

8. Transportstruktur nach einem oder mehreren der vorhergehenden Ansprüche, **dadurch gekennzeichnet, dass** die Hilfsradgruppe (6) in der Lage ist, eine Ruheposition (R), in der das Antriebsrad (61) nicht mit einer Fahrfläche (200) in Kontakt ist, und eine Fahrposition (M), in der das Antriebsrad mit der Fahrfläche in Kontakt ist, einzunehmen, wobei das zweite Betätigungsmittel (7) durch die Steuereinheit (8) steuerbar ist, um die Hilfsradgruppe (6) zu veranlassen, die Ruheposition (R) oder die Fahrposition (M) einzunehmen.

9. Transportstruktur nach den Ansprüchen 6 bis 8, **dadurch gekennzeichnet, dass** die Steuereinheit (8) konfiguriert ist zum:
- Befehlen des zweiten Betätigungsmittels (7), die Hilfsradgruppe (6) zu betätigen, um die Hilfsradgruppe (6) zu veranlassen, die Fahrposition (M) einzunehmen, wenn sich die Hilfsradgruppe in der Ruheposition (R) befindet;
- Befehlen des zweiten Betätigungsmittels, das Antriebsrad (61) zu betätigen, um die Transportstruktur zu bewegen, wenn sich die Hilfsradgruppe in der Fahrposition (M) befindet; nach Ausführen des Steuerverfahrens (50).

## Revendications

1. Structure de transport (1) pour services de santé ou similaire, **caractérisée en ce qu'**elle comprend :
- un cadre de support (2) ;
- une pluralité de groupes de roues principaux (3) connectés fonctionnellement audit cadre de support et comprenant chacun une roue (31), chaque groupe de roues principal pouvant prendre une position libre (L), dans laquelle ladite roue peut se déplacer dans une direction de déplacement et autour d'un axe de pivotement (P), une position de demi-verrouillage (D), dans laquelle ladite roue peut se déplacer dans une direction de déplacement et ne peut pas se déplacer autour dudit axe de pivotement (P), et une position de verrouillage (B), dans laquelle ladite roue est verrouillée ;
- un mécanisme de commande (4) connecté fonctionnellement auxdits groupes de roues principaux, ledit mécanisme de commande pouvant être actionné pour amener lesdits groupes de roues principaux à prendre ladite position libre (L), ladite position de demi-verrouillage (D) ou ladite position de verrouillage (B) ;
- de premiers moyens d'actionnement (5) connectés fonctionnellement audit mécanisme de commande et pouvant être actionnés pour actionner ledit mécanisme de commande ;
- un groupe de roues auxiliaire (6) connecté fonctionnellement audit cadre de support (2) et comprenant une roue d'entraînement (61) capable de se déplacer dans une direction de déplacement, ladite roue d'entraînement pouvant être actionnée pour déplacer ladite structure de transport dans une direction de déplacement ;
- une batterie d'alimentation (9) pour alimenter les composants électriques et électroniques (5, 7, 8) de ladite structure de transport ;
- une unité de commande (8) pouvant commander le fonctionnement desdits premiers moyens d'actionnement ;
- des moyens de détection (15) connectés fonctionnellement à ladite unité de commande et adaptés pour fournir des signaux de détection (S) indicatifs de la position de fonctionnement desdits groupes de roues principaux (3) ;
- un dispositif de commande (70) connecté fonctionnellement à ladite unité de commande et pouvant être actionné par un utilisateur pour envoyer à ladite unité de commande des signaux d'activation (Y) pour déplacer ladite structure de transport selon une direction de déplacement, actionnant ladite roue d'entraînement (61) ;
**caractérisée en ce que**
ladite unité de commande (8) est configurée pour réaliser, en réponse à la réception d'un signal d'activation (Y) provenant dudit dispositif de commande (70), une procédure de commande (50) qui comprend les étapes suivantes consistant à :
- déterminer (51) une position opérationnelle desdits groupes de roues principaux ;
- si lesdits groupes de roues principaux sont dans ladite position de demi-verrouillage (D), commander (52) lesdits premiers moyens d'actionnement (5) d'actionner ledit mécanisme de commande (4) pour amener lesdits groupes de roues principaux (3) à prendre ladite position libre (L).

2. Structure de transport selon la revendication 1, **caractérisée en ce que** l'étape (51) de détermination d'une position opérationnelle dudit groupe de roues principal (3) comprend les étapes consistant à :
- acquérir les signaux de détection (S) fournis par lesdits moyens de détection (15) ;
- traiter lesdits signaux de détection (S) pour déterminer la position de fonctionnement desdits groupes de roues principaux (3).

3. Structure de transport selon une ou plusieurs des revendications précédentes, **caractérisée en ce qu'**elle comprend des moyens de signalisation (16) pouvant être commandés par ladite unité de commande (8) et adaptés pour fournir des signaux d'alarme lumineux ou sonores.

4. Structure de transport selon la revendication 3, **caractérisée en ce que**, si lesdits groupes de roues principaux (3) sont dans ladite position de verrouillage (B), ladite procédure de commande (50) comprend une étape consistant à commander (53) lesdits moyens de signalisation (16) de fournir des signaux d'alarme.

5. Structure de transport selon une ou plusieurs des revendications précédentes, **caractérisée en ce que**, si lesdits groupes de roues principaux (3) sont dans ladite position libre (L), ladite procédure de commande (50) comprend une étape consistant à commander (54) lesdits premiers moyens d'actionnement (5) d'actionner ledit mécanisme de commande (4) pour maintenir lesdits groupes de roues principaux dans ladite position libre (L).

6. Structure de transport selon une ou plusieurs des revendications précédentes, **caractérisée en ce qu'**elle comprend de seconds moyens d'actionnement (7) connectés fonctionnellement audit groupe de roues auxiliaire (6) et pouvant être commandés par ladite unité de commande (8) pour actionner ladite roue d'entraînement (61) de façon à déplacer ladite structure de transport selon une direction de déplacement.

7. Structure de transport selon la revendication 6, **caractérisée en ce que** ladite unité de commande (8) est configurée pour commander lesdits seconds moyens d'actionnement (6) pour actionner ladite roue d'entraînement (61) pour déplacer ladite structure de transport, après avoir réalisé ladite procédure de commande (50).

8. Structure de transport selon une ou plusieurs des revendications précédentes, **caractérisée en ce que** ledit groupe de roues auxiliaire (6) peut prendre une position de repos (R), dans laquelle ladite roue d'entraînement (61) n'est pas en contact avec une surface de déplacement (200), et une position de déplacement (M), dans laquelle ladite roue d'entraînement est en contact avec ladite surface de déplacement, lesdits seconds moyens d'actionnement (7) pouvant être commandés par ladite unité de commande (8) pour amener ledit groupe de roues auxiliaire (6) à prendre ladite position de repos (R) ou ladite position de déplacement (M).

9. Structure de transport selon les revendications 6 à 8, **caractérisée en ce que** ladite unité de commande (8) est configurée pour :
- commander lesdits seconds moyens d'actionnement (7) d'actionner ledit groupe de roues auxiliaire (6) pour amener ledit groupe de roues auxiliaire (6) à prendre ladite position de déplacement (M), si ledit groupe de roues auxiliaire est dans ladite position de repos (R) ;
- commander lesdits seconds moyens d'actionnement d'actionner ladite roue d'entraînement (61) pour déplacer ladite structure de transport, lorsque ledit groupe de roues auxiliaire est dans ladite position de déplacement (M) ; après la réalisation de ladite procédure de commande (50).
